# EUROPEAN PATENT APPLICATION

(11) **EP 2 826 577 A1**
(43) Date of publication of application: **21.01.2015**
(21) Application number: 13761893.0
(22) Date of filing: 27.02.2013
(51) Int. Cl.: B22F 5/08, B22F 3/02, B22F 3/24

(54) **MECHANICAL STRUCTURAL COMPONENT, SINTERED GEAR, AND METHODS FOR PRODUCING SAME**

(30) Priority: 12.03.2012 JP 2012054643; 12.06.2012 JP 2012132820
(71) Applicant: NTN Corporation, Osaka-shi, Osaka 550-0003 (JP)
(72) Inventor: OKUNO, Takahiro, Mie 511-0867 (JP); SHIMAZU, Eiichirou, Mie 511-0867 (JP); ARAKI, Hikaru, Mie 511-0867 (JP)
(74) Representative: Bockhorni & Kollegen
(86) International application number: PCT/JP2013/055136
(87) International publication number: WO 2013/136983

(57) **Abstract**

A sintered gear serving as a mechanical structure component is a mechanical structure component made of a metal sintered body, and includes a base region (13); and a high density region (14) formed so as to include a maximum stress position (17) at which a maximum tensile stress or a maximum shear stress is applied, and to include a surface (15), in which the high density region (14) is lower in porosity than the base region (13). A surface hardened layer (16) is formed in a region including the surface (15) by performing a hardening process

## Description

### TECHNICAL FIELD

The present invention relates to a mechanical structure component, a sintered gear, and methods of manufacturing the mechanical structural component and the sintered gear, and more particularly to a mechanical structure component made of a sintered body, a sintered gear made of a metal sintered body, and methods of manufacturing the mechanical structure component and the sintered gear.

### BACKGROUND ART

Gears have been conventionally used as mechanical structure components for transmitting motive power. A gear is fabricated using a melting material and the like. As a typical method of fabricating a gear made of a melting material, a gear cutting method using a hob or a rack-type cutter is known. According to the gear cutting method, a material having a disc shape (gear blank) is prepared. This gear blank has portions other than a teeth portion that are processed in advance. The gear blank is subjected to a scraping process to provide a tooth groove, thereby achieving a gear having a desired shape.

According to the gear cutting method, a gear blank is cut to obtain a desired gear shape. Accordingly, the cutting process tends to require a relatively long time or powder scrap tends to occur to increase loss of materials. In recent years, a powder metallurgy method has been used in place of the gear cutting method. Among the powder metallurgy methods, particularly, a powder press-molding method is often used. According to the powder press-molding method, a metal mold is filled with raw material powder. The raw material powder is press-molded using the metal mold, thereby molding the raw material powder in a prescribed shape. Then, the molded material is sintered by a sintering process to achieve a gear having a prescribed shape. According to the powder press-molding method, it becomes possible to shorten the fabrication time and to decrease the loss of materials.

The powder press-molding method of press-molding the raw material metal powder using a metal mold to be in the shape of an intended mechanical component is one of methods of manufacturing a mechanical structure component made of a sintered body. The mechanical structure component made of a sintered body fabricated using the powder press-molding method generally has a relative density (the ratio of the density of the sintered body to the true density of the melting material) of about 85% to 92%, in which case a lot of pores remain within the sintered body. The pores within the sintered body exhibit behavior like cracks in the melting material during stress loading. In other words, each pore serves as a stress concentration source, and thereby, lowers the static strength such as tensile strength, compression strength and bending strength, as well as impact strength (toughness) and fatigue strength. Accordingly, the mechanical structure component such as a gear made of a sintered body tends to be inferior in static strength, toughness and fatigue strength than the component made of a melting material even if both are made of materials of equal quality. Consequently, the application of the mechanical structure component made of a sintered body has been limited.

Reduction of pores serving as a stress concentration source, that is, densification of the sintered body, leads to improvement in static strength, toughness and fatigue strength of the mechanical structure component made of a sintered body.

An example of the technique for achieving a high-density sintered body is a double press/double sinter (2P2S) method (for example, see Japanese Patent Laying-Open No. 01-312056 (PTD 1)). This method is to obtain a high-density sintered body by compression-molding a temporary sintered body, which has been temporarily sintered once, within a metal mold again, and then subjecting the resultant sintered body to full-scale sintering. Furthermore, another example of the technique for obtaining a high-density sintered body is a sinter-forging method of performing post-processing after sintering (for example, see Japanese Patent Laying-Open No. 58-133301 (PTD 2)). This method is to perform hot forging in the state where a sintered body is placed in a metal mold, by which a sintered body having an almost true density can be obtained.

According to the methods described above, however, although static strength, toughness and fatigue strength can be improved, there occurs a problem that shape deformation occurs due to release of residual stress and the like by adding thermal history, thereby decreasing the dimensional accuracy. In particular, the sinter-forging method causes a problem that the dimensional accuracy is further decreased by carrying out hot forging. Furthermore, since the methods disclosed in the above-described PTD 1 and PTD 2 each include special processes, the manufacturing cost also tends to increase.

In contrast, there is a proposed technique for improving bending strength and wear resistance by densification of the sintered body by form rolling (for example, see WO92/05897 (PTD 3)). There is also a proposed technique for achieving densification of the surface of the sintered gear by form rolling (for example, see Japanese Patent National Publication No. 06-501988 (PTD 4), and Japanese Patent Laying-Open No. 2004-255387 (PTD 5)). According to the method disclosed in the above-described PTD 4, form rolling is carried out using rolling dies arranged so as to establish a relation of parallel gears with respect to a gear blank. According to the method disclosed in the above-described PTD 5, form rolling is carried out using rolling dies each having a shape like a hob.

### CITATION LIST

### PATENT DOCUMENT

- PTD 1:: Japanese Patent Laying-Open No. 01-312056
- PTD 2:: Japanese Patent Laying-Open No. 58-133301
- PTD 3:: WO92/05897
- PTD 4:: Japanese Patent National Publication No. 06-501988
- PTD 5:: Japanese Patent Laying-Open No. 2004-255387

### SUMMARY OF INVENTION

### TECHNICAL PROBLEM

However, in order to expand the application range of the mechanical structure component made of a sintered body, it is required to further improve static strength, toughness and fatigue strength while suppressing a decrease in dimensional accuracy.

The present invention has been made in order to solve the above-described problems. One object of the present invention is to provide a mechanical structure component allowing improvement in static strength, toughness and fatigue strength while suppressing a decreased in dimensional accuracy, and a method of manufacturing the mechanical structure component. Furthermore, another object of the present invention is to provide a sintered gear having high shape accuracy and capable of exhibiting high fatigue characteristics, and a method of manufacturing the sintered gear.

### SOLUTION TO PROBLEM

A mechanical structure component according to the present invention is a mechanical structure component made of a metal sintered body. The mechanical structure component includes a base region; and a high density region formed so as to include a maximum stress position at which a maximum tensile stress or a maximum shear stress is applied, and to include a surface, in which the high density region is lower in porosity than the base region. A surface hardened layer is formed in a region including the surface by performing a hardening process.

According to the mechanical structure component of the present invention, since pores in the vicinity of the surface including the maximum stress position are reduced, the stress concentration sources during stress loading are reduced. Accordingly, occurrence and progression of cracks within the mechanical structure component that is a sintered body slow down, and thereby, static strength, toughness and fatigue strength are improved. Furthermore, according to the mechanical structure component of the present invention, a high density region that is lower in porosity than the base region is formed only in the vicinity of the surface including the maximum stress position. This eliminates the need to achieve densification of the entire mechanical structure component. Accordingly, since it is not necessary to employ the above-mentioned 2P2S method for achieving densification of the entire mechanical structure component and the method of performing hot forging after sintering, it becomes possible to ensure relatively higher dimensional accuracy. Furthermore, since a surface hardened layer is formed in the region including the above-described surface, the static strength and the fatigue strength of this surface are further improved. In this way, according to the mechanical structure component of the present invention, it becomes possible to provide a mechanical structure component allowing improvement in static strength, toughness and fatigue strength while suppressing a decrease in dimensional accuracy.

In addition, the porosity can be measured as described below, for example. First, the mechanical structure component is cut in cross section perpendicular to the above-described surface. Then, the cut surface is polished, the polished cut surface is observed with an optical microscope, and image data (or a photograph) is obtained. The obtained image data (or a photograph) is subjected to binarization processing, for example, so that pores are rendered black while regions other than the pores are rendered white. Then, the proportion (area ratio) of a black region is calculated as porosity. Furthermore, the above-described maximum stress position means the position at which the maximum tensile stress or the maximum shear stress directly causing damage are applied at the time when the mechanical structure component is normally used, and for example, means the maximum shear stress region and the like under the contact surface of each of the tooth root of a gear or a sprocket and a rolling contact member (a cam and the like). Furthermore, it is preferable that the above-described surface included in the high density region includes a surface region corresponding to the maximum stress position or a surface region closest to the maximum stress position.

According to the mechanical structure component, the surface hardened layer may be less in thickness than the high density region in a cross section perpendicular to the surface. Accordingly, even when the crack occurring in the above-described surface extends through the surface hardened layer, progression of the crack slows down in the high density region that is less in number of pores and higher in toughness. Consequently, the toughness and the fatigue strength of the mechanical structure component can be further improved.

According to the mechanical structure component, the hardening process may be a carburizing and quenching process. The carburizing and quenching process that can be relatively readily carried out is suitable for formation of the surface hardened layer.

According to the mechanical structure component, the thickness of the high density region may be 100 µm or more in the cross section perpendicular to the surface. By forming a high density region having a thickness of 100 µm or more, static strength, toughness and fatigue strength can be more reliably improved.

According to the mechanical structure component, the high density region may have a thickness of 700 µm or less in a cross section perpendicular to the surface. When the high density region having a thickness exceeding 700 µm is formed, crack sensitivity may become higher and fatigue strength may decrease. The high density region is configured to have a thickness of 700 µm or less, so that occurrence of such problems can be suppressed.

According to the mechanical structure component, the high density region may have a porosity of less than 2%. Thereby, static strength, toughness and fatigue strength can be more reliably improved.

According to the mechanical structure component, the base region may have a porosity of 2% or more and 15% or less. The base region is configured to have a porosity of 2% or more, with the result that the base region can be readily formed without using the 2P2S method or the method performing hot forging after sintering as described above. On the other hand, the base region is configured to have a porosity of 15% or less, with the result that the strength required for the base region can be readily ensured.

According to the mechanical structure component, the surface may have hardness of HRA 75 or more. Thereby, the surface can be provided with relatively higher strength.

According to the mechanical structure component, the high density region may be formed by performing cold working. Since this allows formation of a high density region without applying heat, a decrease in dimensional accuracy can be suppressed.

According to the mechanical structure component, the above-mentioned cold working may be cold rolling working. The cold rolling working is suitable for formation of the high density region.

According to the mechanical structure component, the metal sintered body may be made of iron as a main component. Furthermore, the metal sintered body may contain 80% by mass or more of iron. In this way, the metal sintered body made of iron as a main component is suitable as a material of the mechanical structure component of the present invention.

The mechanical structure component may be used as a power transmission component. The mechanical structure component of the present invention that is improved in static strength, toughness and fatigue strength while suppressing a decrease in dimensional accuracy can be used for the power transmission component required to have relatively higher dimensional accuracy and durability.

According to the mechanical structure component, when a test piece made of the metal sintered body is fabricated and a ring-compression fatigue test is carried out, it is preferable that the fatigue strength is 300 MPa or higher. In this way, the metal sintered body having relatively higher fatigue strength is suitable as a material of the mechanical structure component of the present invention. It is to be noted that the fatigue strength can be examined by the method described in Examples set forth later.

A sintered gear according to the present invention is made of the mechanical structure component according to the present invention described above. The sintered gear includes a tooth root region; an engagement region located closer to a top land than the tooth root region is; and a tooth tip region located closer to the top land than the engagement region is. The high density region is formed in the tooth root region so as to include a surface of the tooth root region and a critical section determined by Hofer's 30° tangent line method, in which the high density region has a density higher than the density of each of the engagement region and the tooth tip region. The surface hardened layer is formed on a surface of the high density region.

The high density region may have a porosity of 2% or less. The surface hardened layer may be formed by performing a carburizing, quenching and tempering process. The surface of the high density region may have hardness of HRA 75 or more. The high density region may be formed by performing cold working.

The high density region may be formed by the cold working using a rolling die by which only a portion of the metal sintered body corresponding to the surface of the tooth root region is subjected to form rolling. The high density region may be formed by the cold working by which only the portion of the metal sintered body corresponding to the surface of the tooth root region is subjected to form rolling while synchronizing rotation of the rolling die having a hob shape and rotation of the metal sintered body. The high density region may be formed by the cold working using the rolling die having, as a blade shape, a base portion formed in a cylindrical shape and an end portion formed in a hemispherical shape.

A method of manufacturing a mechanical structure component according to the present invention includes the steps of: preparing raw material powder made of metal; fabricating a metal sintered body by sintering the raw material powder; forming a high density region so as to include a maximum stress position at which a maximum tensile stress or a maximum shear stress is applied and to include a surface, the high density region being lower in porosity than other regions; and forming a surface hardened layer in a region including the surface by performing a hardening process. Consequently, the mechanical structure component according to the present invention described above can be manufactured.

According to the method of manufacturing a mechanical structure component, in the step of forming a high density region, the high density region may be formed by subjecting the surface to cold working. Thereby, the high density region can be readily formed while maintaining the dimensional accuracy.

According to the method of manufacturing a mechanical structure component, in the step of fabricating a metal sintered body, the metal sintered body having a relative density of 93% or more may be fabricated. Furthermore, according to the method of manufacturing a mechanical structure component, in the step of fabricating a metal sintered body, the metal sintered body having an average pore diameter of 100 µm or less may be fabricated. In this way, a high density region having sufficient compactness can be obtained by a small machining margin, for example, when the high density region is formed by cold working.

According to the method of manufacturing a mechanical structure component, in the step of preparing raw material powder, raw material powder having a particle size of 100 µm or less in terms of D50 may be prepared. This allows suppression of production of pores in the metal sintered body. On the other hand, in the step of preparing raw material powder, raw material powder having a particle size of 5 µm or more in terms of D50 may be prepared. When the particle size of the raw material powder is too small, friction between powders or between powder and a metal mold is increased, thereby deteriorating moldability. Consequently, the density of the pressurized powder body to be fabricated is rather decreased, so that pores in the metal sintered body may increase. Such deterioration of moldability can be suppressed by employing raw material powder having a particle size of 5 µm or more in terms of D50.

A method of manufacturing a sintered gear according to the present invention is a method of manufacturing a sintered gear using the method of manufacturing a mechanical structure component according to the present invention described above. According to the method of manufacturing a sintered gear, in the step of forming a high density region, the high density region is formed in a tooth root region of the metal sintered body. The high density region includes a surface of the tooth root region and a critical section determined by Hofer's 30° tangent line method, and has a density higher than the density of each of an engagement region and a tooth tip region that are located closer to a top land than the tooth root region is. Furthermore, in the step of forming a surface hardened layer, the surface hardened layer is formed on a surface of the high density region.

According to the method of manufacturing a sintered gear, in the step of forming a surface hardened layer, the surface hardened layer may be formed by performing a carburizing, quenching and tempering process. Furthermore, in the step of forming a high density region, the high density region may be formed by performing cold working. Furthermore, in the step of fabricating a metal sintered body, the metal sintered body having a relative density of 93% or more may be fabricated.

Furthermore, according to the method of manufacturing a sintered gear, in the step of preparing raw material powder, the raw material powder having a particle size with an average particle diameter of 100 µm or less in terms of D50 may be prepared. Furthermore, the metal sintered body before formation of the high density region may be greater in root diameter by a range of 100 µm to 800 µm than the sintered gear obtained as a finished product.

### ADVANTAGEOUS EFFECTS OF INVENTION

As apparent from the above description, according to the mechanical structure component and the method of manufacturing the same in accordance with the present invention, it becomes possible to provide a mechanical structure component allowing improvement in static strength, toughness and fatigue strength while suppressing a decrease in dimensional accuracy, and a method of manufacturing the mechanical structure component. Furthermore, according to the sintered gear and the method of manufacturing the same in accordance with the present invention, it becomes possible to provide a sintered gear having high shape accuracy and capable of exhibiting high fatigue characteristics, and a method of manufacturing the sintered gear.

### BRIEF DESCRIPTION OF DRAWINGS

Fig. 1 is a schematic diagram showing the structure of a sintered gear according to an embodiment of the present invention.
Fig. 2 is a partial cross-sectional view showing the inner structure of the sintered gear according to the embodiment of the present invention.
Fig. 3 is a schematic partial cross-sectional view showing pores existing in the vicinity of a tooth root of the sintered gear according to the embodiment of the present invention.
Fig. 4 is a cross-sectional view for illustrating a critical section determined by Hofer's 30° tangent line method that is formed in a tooth of the sintered gear according to the embodiment of the present invention.
Fig. 5 is a diagram showing a rolling die used for a method of manufacturing the sintered gear according to the embodiment of the present invention.
Fig. 6 is a schematic diagram showing the structure of a cam according to the embodiment of the present invention.
Fig. 7 is a schematic partial cross-sectional view showing the inner structure of the cam according to the embodiment of the present invention.
Fig. 8 is a flowchart illustrating the outline of the method of manufacturing a mechanical structure component according to the embodiment of the present invention.
Fig. 9 is a diagram showing the method of manufacturing the sintered gear according to the embodiment of the present invention.
Fig. 10 is a diagram showing a metal sintered body obtained in a sintering step of the method of manufacturing the sintered gear according to the embodiment of the present invention.
Fig. 11 is a photograph of a cross section of a test piece in Example of the present invention.
Fig. 12 is a photograph of a cross section of a test piece in Example of the present invention.
Fig. 13 is a photograph of a cross section of a test piece in Example of the present invention.
Fig. 14 is a diagram showing the relation between the thickness of a high density region and ring-compression fatigue strength.

### DESCRIPTION OF EMBODIMENTS

The embodiments of the present invention will be hereinafter described with reference to the accompanying drawings, in which the same or corresponding components are designated by the same reference characters, and a description thereof will not be repeated.

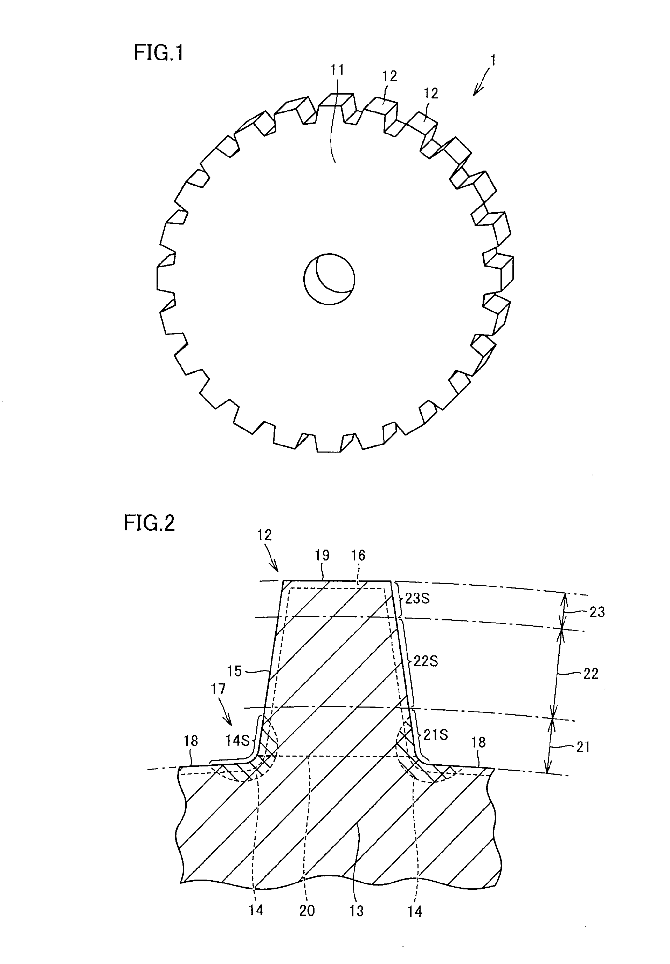

First, one embodiment of a mechanical structure component of the present invention will be described with reference to a gear as an example. Referring to Fig. 1, a sintered gear 1 (a gear) serving as a power transmission component includes a main body portion 11 having a disc shape, and a plurality of teeth 12 protruding from main body portion 11 in the radial direction. Sintered gear 1 is made of a metal sintered body. This metal sintered body may be made of iron as a main component, and more specifically, may contain 80% by mass or more of iron.

Referring to Figs. 1 and 2, the maximum tensile stress that may directly cause damage to a tooth root portion is applied in the state where sintered gear 1 is normally used. In other words, in sintered gear 1, the tooth root surface is regarded as a maximum stress position 17. This sintered gear 1 includes a base region 13; and a high density region (high-density tooth root region) 14 formed so as to include maximum stress position 17 and a surface 15, in which high density region 14 is lower in porosity than base region 13. More specifically, high density region 14 is formed so as to include a tooth root of tooth 12. Then, a surface hardened layer 16 is formed in the region including surface 15. This surface hardened layer 16 is a carburized layer formed by a carburizing and quenching process, for example.

In sintered gear 1 according to the present embodiment, high density region 14 is formed to reduce pores in the vicinity of surface 15 including maximum stress position 17, thereby reducing stress concentration sources during stress loading. More specifically, according to the present embodiment, occurrence and progression of cracks from the surface lead to formation of high density region 14 in the vicinity of the tooth root at which damage tends to occur, thereby reducing pores serving as a stress concentration source. Accordingly, progression of cracks within sintered gear 1 as a sintered body slows down while static strength, toughness and fatigue strength are improved. Furthermore, according to sintered gear 1, sintered gear 1 does not entirely undergo densification, but high density region 14 is formed only in the vicinity of surface 15 including maximum stress position 17. Accordingly, high density region 14 can be formed, for example, using cold working such as cold rolling without employing hot forging or the like for forming high density region 14. Accordingly, sintered gear 1 having relatively higher dimensional accuracy can be achieved. Furthermore, since surface hardened layer 16 is formed in the region including surface 15, the static strength and the fatigue strength of surface 15 are further improved. In this way, sintered gear 1 in the present embodiment is achieved as a mechanical structure component that is improved in static strength, toughness and fatigue strength while suppressing a decrease in dimensional accuracy.

Furthermore, according to sintered gear 1, in a cross section perpendicular to surface 15, surface hardened layer 16 is preferably less in thickness than high density region 14, as shown in Fig. 2. This slows down progression of cracks in high density region 14 that is less in number of pores and higher in toughness even when cracks occurring in surface 15 extend through surface hardened layer 16. Consequently, the toughness and the fatigue strength of sintered gear 1 can be further improved. It is to be noted that the thickness of high density region 14 means a distance in high density region 14 between the surface and the region furthest from the surface. Furthermore, high density region 14 can be configured to have the same thickness as that of the region where the porosity is decreased by 10% or more with respect to base region 13, for example.

Furthermore, according to sintered gear 1, in a cross section perpendicular to surface 15, the thickness of high density region 14 is preferably 100 µm or more. This allows more reliable improvement in static strength, toughness and fatigue strength. On the other hand, the thickness of high density region 14 is preferably 700 µm or less, preferably 300 µm or less, and further preferably 250 µm or less. Accordingly, it becomes possible to suppress an increase in crack sensitivity to ensure relatively higher fatigue strength.

Furthermore, in sintered gear 1, it is preferable that the porosity of high density region 14 is less than 2%. This allows more reliable improvement in static strength, toughness and fatigue strength. On the other hand, the porosity of base region 13 can be set at 2% or more and 15% or less.

Furthermore, in sintered gear 1, it is preferable that the hardness of surface 15 is HRA 75 or more. Thereby, surface 15 can be provided with relatively higher strength.

Furthermore, in sintered gear 1, it is preferable that the above-described high density region 14 is formed by performing cold working such as cold rolling working. Since this allows formation of high density region 14 without applying heat, it becomes possible to suppress a decrease in dimensional accuracy.

Furthermore, in sintered gear 1, it is preferable that the fatigue strength is 300 MPa or more when a test piece made of a metal sintered body forming sintered gear 1 is fabricated to perform a ring-compression fatigue test. Thereby, it becomes possible to ensure relatively higher fatigue strength of sintered gear 1.

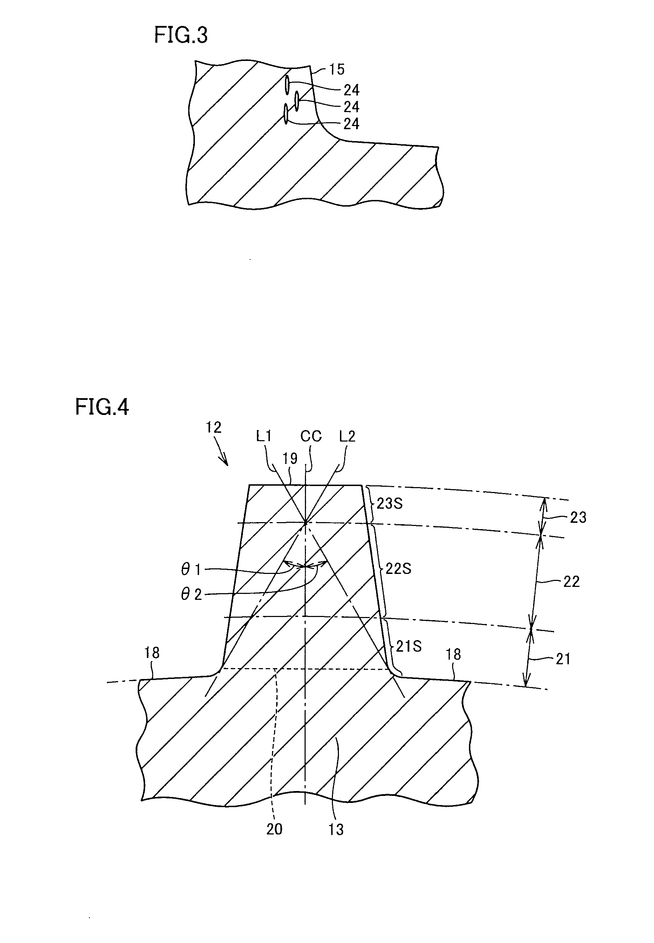

Furthermore, referring to Fig. 3, within high density region 14 (see Fig. 2), it is preferable that pores 24 each have a flat shape extending along the outer periphery of sintered gear 1 (see Fig. 1). More specifically, as to pore 24 existing below the tooth root surface corresponding to the portion referred to as a critical section in accordance with Hofer's 30° tangent line method where the maximum bending stress is exerted, it is preferable that pore 25 is oriented such that its longitudinal direction is perpendicular to the critical section. Consequently, each pore 24 is reduced in width in the direction in which a crack progresses, to thereby suppress the effect of facilitating crack progression in pore 24, so that the fatigue strength is improved.

Then, the structure of sintered gear 1 will be hereinafter described in more detail. Referring to Fig. 2, tooth 12 is formed so as to protrude from a bottom land 18 that is an outer edge of base region 13 corresponding to main body portion 11 (see Fig. 1) toward a top land 19. Tooth 12 includes a tooth root region 21 located closer to bottom land 18, an engagement region 22 located closer to top land 19 than tooth root region 21 is, and a tooth tip region 23 located closer to top land 19 than engagement region 22 is. A critical section 20 determined by Hofer's 30° tangent line method is formed in tooth 12 of sintered gear 1.

Fig. 4 is a cross-sectional view for illustrating critical section 20 determined by Hofer's 30° tangent line method and formed in tooth 12. For the sake of illustration, tooth 12 shown in Fig. 4 includes neither a high-density tooth root region 14 (which will be described in detail with reference to Fig. 2) nor a surface hardened layer 16 (which will be described in detail with reference to Fig. 2).

As shown in Fig. 4, critical section 20 determined by Hofer's 30° tangent line method and formed in tooth 12 is an imaginary cross section formed when connecting positions (two points) at which straight lines L1 and L2 intersecting at angles θ1 and θ2, respectively, of 30° with respect to a tooth shape center line CC of tooth 12 are inscribed in the tooth curve of the tooth root of tooth 12. When load acts on tooth 12 of sintered gear 1, critical section 20 is more likely to be damaged as compared with the surrounding areas.

Again referring to Fig. 2, high density region 14 is formed in tooth root region 21 of tooth 12. High density region 14 is formed so as to extend almost entirely over a surface 21S of tooth root region 21, and also formed so as to include a portion closer to each side of critical section 20 determined by Hofer's 30° tangent line method. High density region 14 is higher in density than engagement region 22 and also than tooth tip region 23.

In other words, high density region 14 is lower in porosity than engagement region 22 and than tooth tip region 23. High density region 14 may have a porosity of 2% or less. This configuration allows further improvement in static strength, toughness and fatigue strength. The hardness of a surface 14S of high density region 14 may be 75 or more in terms of HRA (Rockwell Hardness A-Scale). According to this configuration, surface 14S of high density region 14 can be provided with relatively higher strength.

The porosity of high density region 14 can be measured as described below, for example. First, tooth 12 of sintered gear 1 is cut in cross section perpendicular to surface 14S of high density region 14. Then, the cut surface is polished, the polished cut surface is observed with an optical microscope, and image data (or a photograph) is obtained. The obtained image data (or a photograph) is subjected to binarization processing and set, for example, such that a pore portion is rendered black while a region other than the pore portion is rendered white. The proportion (area ratio) of the black region to the white region can be calculated as porosity.

Surface hardened layer 16 is formed on surface 14S of high density region 14. In tooth 12 of the present embodiment, surface hardened layer 16 is formed so as to extend over each of the surface of bottom land 18, surface 21S of tooth root region 21, a surface 22S of engagement region 22, a surface 23 S of tooth tip region 23, and the surface of top land 19. Surface hardened layer 16 is formed so as to include entire surface 14S of high density region 14. By undergoing a hardening process such as a carburizing and quenching process or a nitriding process, surface hardened layer 16 can be readily formed as a carburized layer.

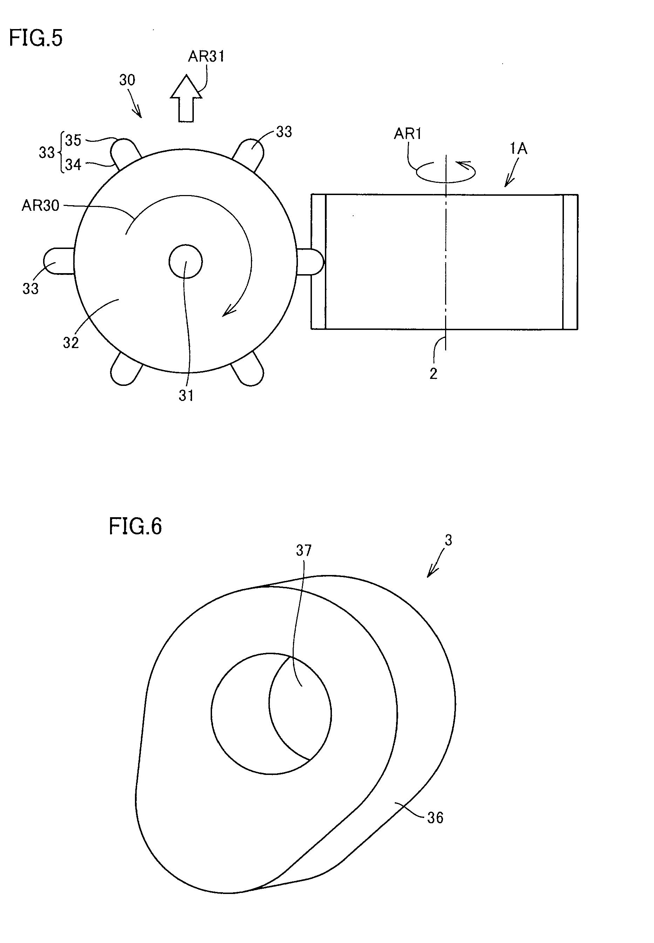

Referring to Fig. 5, high density region 14 (see Fig. 2) is preferably formed by performing cold working. Since cold working allows formation of high density region 14 without applying heat, it becomes possible to suppress a change in the metallographic structure and a decrease in the dimensional accuracy. For example, when high density region 14 is formed, a rolling die 30 is prepared in advance and a metal sintered body 1A is subjected to a form rolling process. Metal sintered body 1A is a basic material for fabricating sintered gear 1 (see Fig. 1) and obtained by press-molding raw material powder including metal. Metal sintered body 1A is driven to be rotated around a rotation axis 2 in the direction indicated by an arrow AR1.

Rolling die 30 includes a main body portion 32 supported by a rotation axis 31 and a plurality of blades 33 provided so as to protrude from the outer periphery of main body portion 32. Rolling die 30 also has a hob shape (a thread shape like a hob) in its entirety. Blade 33 of rolling die 30 is formed so as to come in contact with tooth root region 21. Blade 33 has, as a blade shape, a base portion 34 formed in a cylindrical shape and an end portion 35 formed in a hemispherical shape. Rolling die 30 is driven to be rotated around rotation axis 31 in the direction indicated by an arrow AR30.

Metal sintered body 1A and rolling die 30 are arranged in the so-called diagonal bracing manner, in which rotation axis 2 and rotation axis 31 do not intersect with each other and are not located in parallel to each other. Metal sintered body 1A and rolling die 30 rotate in synchronization with each other while rolling die 30 moves relative to metal sintered body 1A in the direction indicated by arrow AR31. In the state where rolling die 30 and metal sintered body 1A are in contact with each other, rolling die 30 applies pressure only to a portion of metal sintered body 1A corresponding to the surface of the tooth root region (a portion of sintered gear 1 fabricated from metal sintered body 1 A corresponding to surface 21S of tooth root region 21) for performing a form rolling process.

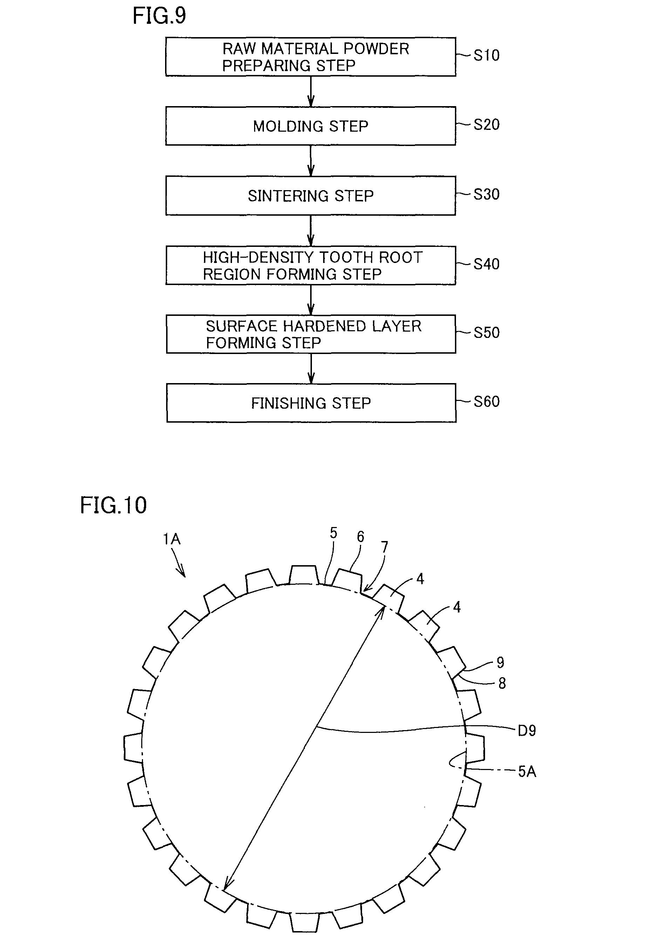

By this form rolling process, sintered gear 1 (see Fig. 1) having high density region 14 (see Fig. 2) is obtained. Although details will be described later, this form rolling process (cold working) is carried out in the step after sintering and before performing a surface hardening process. Accordingly, relatively large deformation can be provided by weak processing force. According to rolling die 30, relatively large surface pressure can be applied to the tooth root region of metal sintered body 1A during form rolling (see a tooth root formation region 7 in Fig. 10) while suppressing sliding during form rolling. According to rolling die 30, a relatively greater indentation amount can be achieved with less pressing load while preventing impairment of the shapes of other regions. The size of the radius of hemispherically-formed end portion 35 of rolling die 30 is adjusted, so that the sliding amount can be reduced in accordance with the rotation number and the movement speed of rolling die 30.

In sintered gear 1 according to the present embodiment, high density region 14 is partially formed, and pores in the vicinity of critical section 20 determined by Hofer's 30° tangent line method (in the tooth root portion) are decreased. In the state where sintered gear 1 is used, while the maximum tensile stress tends to occur in the tooth root portion in the vicinity of critical section 20, the stress concentration sources are decreased in the vicinity of critical section 20 of sintered gear 1. High density region 14 is formed in the vicinity of the tooth root where damage tends to be caused by occurrence of cracks from the surface of tooth 12 of sintered gear 1 as a sintered body and also caused by progression of cracks into tooth 12 of this sintered gear 1. Thereby, occurrence and progression of cracks within sintered gear 1 as a sintered body slow down. Thus, sintered gear 1 can be improved in static strength, toughness and fatigue strength (dynamic strength).

According to the form rolling method disclosed in Japanese Patent National Publication No. 06-501988 (PTD 4) and Japanese Patent Laying-Open No. 2004-255387 (PTD 5) described in the beginning of this specification, the process is carried out for the entire tooth surface from the tooth tip toward the tooth root. In order to perform the process so as to maintain the shape accuracy of the engagement region while ensuring the sufficient form-rolling indentation amount, the orientation of the tissue structure of the tooth surface has to be taken into consideration. Otherwise, a large bending stress may be applied to the tooth root during form rolling of the tooth tip portion, so that split or micro-crack may occur in the tooth root region (particularly in the critical section). According to the methods disclosed in PTD 4 and PTD 5, the sliding amount of the rolling die on the tooth surface tends to increase, so that it is difficult to ensure the tooth surface shape with high accuracy while ensuring sufficient form-rolling indentation amount.

In contrast, according to sintered gear 1 in the present embodiment, high density region 14 is partially formed and sintered gear 1 does not entirely undergo densification. During production of sintered gear 1, it is not necessary to employ both of the double press/double sinter (2P2S) method for subjecting the entire sintered gear 1 to densification and the method of performing hot forging after sintering. Since sintered gear 1 including high density region 14 can be fabricated using cold working such as a cold rolling process, relatively higher dimensional accuracy can be ensured.

According to sintered gear 1 of the present embodiment, since surface hardened layer 16 is formed on surface 14S of high density region 14, occurrence of cracks is suppressed, so that surface 14S is further improved in static strength and fatigue strength. Since the toughness inside sintered gear 1 is ensured by performing carburizing, quenching and tempering, progression of cracks can also be suppressed. As described above, sintered gear 1 of the present embodiment allows improvement in static strength and toughness and also allows high fatigue characteristics to be exhibited while ensuring high dimensional accuracy.

Then, as another embodiment of the present invention, described will be the case where the invention of the present application is applied to a cam serving as a power transmission component. The cam in the present embodiment is basically similar in configuration and effect to the above-described sintered gear in terms of configurations of the base region, the high density region and the surface hardened layer. Referring to Fig. 6, cam 3 in the present embodiment is made of a metal sintered body. Also, cam 3 is provided on its outer peripheral surface with a contact surface 36 coming in contact with other components such as a rocker arm and a push rod within the engine, and provided with a through hole 37 through which a cam shaft is inserted. In the state where cam 3 is normally used, a region undergoing the maximum shear stress that may directly cause damage is formed below contact surface 36. In other words, this maximum shear stress region corresponds to the maximum stress position in cam 3.

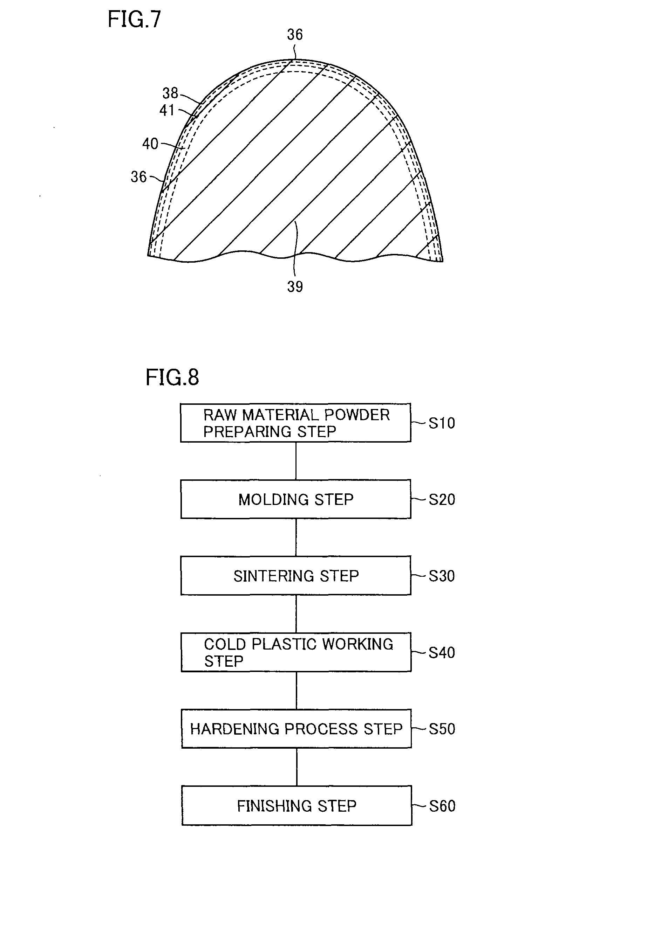

Referring to Fig. 7, cam 3 (see Fig. 6) includes a base region 39; and a high density region 40 formed so as to include a maximum stress position 38 and a contact surface 36, in which high density region 40 is lower in porosity than base region 39. More specifically, high density region 40 is formed so as to include the entire region of contact surface 36 corresponding to the outer peripheral surface. Then, the region including contact surface 36 is subjected to a hardening process, thereby forming surface hardened layer 41. Furthermore, according to the present embodiment, in the cross section perpendicular to contact surface 36, surface hardened layer 41 is less in thickness than high density region 40.

Then, an example of the method of manufacturing sintered gear 1 and cam 3 described above will be hereinafter described. Referring to Fig. 8, the method of manufacturing the mechanical structure component in the present embodiment includes a raw material powder preparing step as step (S10). In this step (S10), for example, iron-based powder such as P1064 to P1084 and P3074 to P3106 defined in JIS Z 2550 is prepared as metal powder used as raw material powder of a sintered body. Furthermore, the particle size of the metal powder to be prepared can be set at 5 µm or more and 100 µm or less, and more preferably 10 µm or more and 50 µm or less in terms of D50.

Then, in step (S20), the raw material powder prepared in step (S10) is charged into a metal mold and molded therein. Thereby, a compact having a shape corresponding to the shape of a desired mechanical component is fabricated. At this time, a lubricant and a sintering aid can be added to raw material powder as required.

Then, a sintering step is carried out as step (S30). In this step (S30), the compact fabricated in step (S20) is heated, for example, in the inert gas atmosphere such as argon, and thereby, sintered. Consequently, a sintered body having a rough outline shape of a desired mechanical structure component such as a gear or a cam is obtained. In this case, it is preferable that a metal sintered body having a relative density of 93% or more is fabricated. Furthermore, it is also preferable that the metal sintered body to be fabricated has an average pore diameter of 100 µm or less.

Then, a cold plastic working step is carried out as step (S40). In this step (S40), cold plastic working such as cold rolling working is carried out for the desired part of the sintered body obtained in step (S30). Specifically, cold rolling is carried out, for example, in the vicinity of the tooth root of the gear or in the contact surface of the cam, thereby forming a high density region so as to include the maximum stress position and a surface, in which the high density region is lower in porosity than other regions.

Then, a hardening process step is carried out as step (S50). In this step (S50), for example, a hardening process such as a carburizing and quenching process is carried out for the region including the above-described surface of the sintered body having the high density region formed in step (S40), thereby forming a surface hardened layer. In this case, it is preferable that the surface hardened layer is formed to have a thickness less than the thickness of the high density region.

Then, a finishing step is carried out as step (S60). In this step, finish processing such as polishing is carried out in a desired region as required. By the above-described procedure, the method of manufacturing the mechanical structure component according to the present embodiment is ended, and mechanical structure components such as the above-described sintered gear 1, cam 3 and the like are completed.

Then, the method of manufacturing sintered gear 1 as described above will be hereinafter described in detail. Referring to Fig. 9, the method of manufacturing sintered gear 1 in the present embodiment includes a raw material powder preparing step (S10), a molding step (S20), a sintering step (S30), a high-density tooth root region forming step (S40), a surface hardened layer forming step (S50), and a finishing step (S60). These steps (S10) to (S60) can be carried out in this order.

In the raw material powder preparing step (S10), the raw material powder made of metal is prepared as a raw material of the sintered body, as described above. It is preferable that an iron-based material for a structure component defined in JIS Z 2550 is prepared as raw material powder made of metal. The particle size of the raw material powder made of metal is preferably 5 µm or more and 100 µm or less in terms of D50. More preferably, the particle size of the raw material powder made of metal is 10 µm or more and 50 µm or less in terms of D50.

In the molding step (S20), the raw material powder prepared in the raw material powder preparing step (S10) is charged into a metal mold and press-molded therein, as described above. Then, a compact having a shape corresponding to the shape of sintered gear 1 (or metal sintered body 1A shown in Fig. 10) is fabricated. In this case, a lubricant or a sintering aid may be added to the raw material powder as required.

In the sintering step (S30), the compact fabricated in the molding step (S20) is heated, for example, in the inert gas atmosphere such as argon, and thereby sintered. Thus, metal sintered body 1A (see Fig. 10) having a rough outline shape of sintered gear 1 (see Fig. 1) is obtained. In this case, it is preferable that metal sintered body 1A having a relative density of 93% or more is fabricated. For example, when high density region 14 is formed by cold working, high density region 14 having sufficient compactness can be obtained by a small machining margin. It is preferable that the average pore diameter of metal sintered body 1A is 100 µm or less. The pores of metal sintered body 1A can be entirely reduced.

As shown in Fig. 10, metal sintered body 1A obtained by sintering step (S30) has a rough outline shape of sintered gear 1 (see Fig. 1), in which a plurality of teeth 4 are formed around the disc-shaped main body portion. Teeth 4 correspond to teeth 12 (see Fig. 1) in sintered gear 1 (see Fig. 1). Teeth 4 each extend from bottom land 5 toward top land 6, and include tooth root formation region 7 (tooth root region), engagement formation region 8 (engagement region), and tooth tip formation region 9 (tooth tip region).

Bottom land 5 corresponds to bottom land 18 (see Fig. 2) in sintered gear 1 (see Fig. 1). Bottom land 5 forms a root circle 5A. Top land 6 corresponds to top land 19 in sintered gear 1. Tooth root formation region 7 corresponds to tooth root region 21 in sintered gear 1. Engagement formation region 8 corresponds to engagement region 22 in sintered gear 1. Tooth tip formation region 9 corresponds to tooth tip region 23 in sintered gear 1.

In the high-density tooth root region forming step (S40) described below, high density region (high-density tooth root region) 14 is formed. It is preferable that a root diameter D9 of metal sintered body 1A before formation of high density region 14 is greater by a range of 100 µm to 800 µm than the root diameter of sintered gear 1 obtained as a finished product. According to this configuration, it becomes possible to ensure an excess thickness to be pushed into the tooth root region (tooth root formation region 7) in cold working carried out later.

In order to ensure the high shape accuracy for sintered gear 1 as a finished product, it is preferable that the indentation amount is set to be equal to or less than the size of the bottom clearance determined based on a module. According to this configuration, it becomes possible to perform plastic working only for the tooth root region (tooth root formation region 7) without subjecting the engagement region of the tooth surface to plastic working. For example, when sintered gear 1 as a module is fabricated, it is preferable that root diameter D9 of metal sintered body 1A is greater by about 100 µm to 500 µm than the root diameter of sintered gear 1 obtained as a finished product.

In the high-density tooth root region forming step (S40), cold working is carried out. Cold working such as a cold rolling process is carried out for the surface of tooth root formation region 7 in metal sintered body 1A obtained in the sintering step (S30) (in other words, the surface corresponding to surface 21S of tooth root region 21 in sintered gear 1). In tooth root formation region 7 (tooth root region) of metal sintered body 1A, high density region 14 is formed that includes a surface of tooth root formation region 7 and a critical section determined by Hofer's 30° tangent line method, and that has a density higher than the density of each of engagement formation region 8 (engagement region) and tooth tip formation region 9 (tooth tip region) that are located closer to top land 6 than tooth root formation region 7 (tooth root region) is.

Again referring to Fig. 9, a hardening process is carried out in the surface hardened layer forming step (S50). For example, a hardening process such as a carburizing, quenching and tempering process or a nitriding process is carried out for the region including surface 14S of high density region 14 of metal sintered body 1A having this high density region 14 formed in the high-density tooth root region forming step (S40), thereby forming surface hardened layer 16.

Then, the finishing step (S60) is carried out. In this step, finish processing such as polishing is carried out for a desired region as required. By the above-described procedure, the method of manufacturing sintered gear 1 in the present embodiment is completed, and sintered gear 1 as shown in Fig. 1 can be obtained. As described above, sintered gear 1 allows improvement in static strength and toughness and also allows high fatigue characteristics to be exhibited while ensuring high dimensional accuracy.

### Examples

Experiments for confirming the superiority of the mechanical structure component of the present invention were carried out. The procedure of each experiment is as follows. First, three types of metal powders shown in Table 1 described below were prepared as raw material powder, and molded and sintered under the conditions shown in Table 1. After the obtained sintered body was subjected to cold rolling working by a machining margin shown in Table 2, the sintered body was heated to 870 °C in the carburizing atmosphere and maintained for 30 minutes, thereby forming a carburized layer having a thickness of 120 µm on the surface. Then, after performing quench hardening, the sintered body was heated to 150 °C and maintained for 90 minutes, thereby performing a tempering process. By the above-described procedure, a ring-shaped test piece of outer diameter ϕ 24 mm × inner diameter ϕ 18 mm × height 7 mm (thickness 3 mm) was fabricated. Furthermore, the above-described cold rolling working was carried out for the inner peripheral surface of the test piece (Examples 1 to 6). Furthermore, test pieces fabricated without performing cold rolling working in the similar procedure were also prepared for the purpose of comparison (Comparative Examples 1 to 3).

**[Table 1]**

| | Examples 1 to 4 Comparative Example 1 | Example 5 Comparative Example 2 | Example 6 Comparative Example 3 |
|---|---|---|---|
| Material | Iron alloy containing 2% Ni Manufactured by Epson Atmix Corporation Atomized Powder | JIP21SX Manufactured by JFE Steel Corporation Atomized Powder | P2043 to P2045 JIS Z 2550 Atomized Powder |
| Powder Average Particle Diameter (D50) | 6 µm | 150 µm | 80 µm |
| Molding Pressure | 1000 MPa | 600 MPa | 1500 MPa |
| Sintering Condition | 1250°C, 150 min. | | |
| Relative Density of Sintered Body | 93% | 88% | 95% |
| Average Pore Diameter | 50 µm | 150 µm | 80 µm |

**[Table 2]**

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Machining Margin (µm) | 100 | 150 | 300 | 500 | 100 | 150 | 0 | 0 | 0 |
| Surface Hardness (HRA) | 80 | 80 | 80 | 80 | 70 | 80 | 75 | 70 | 75 |
| Improvement Rate of Fatigue Strength | B | A | B | B | C | B | - | - | - |

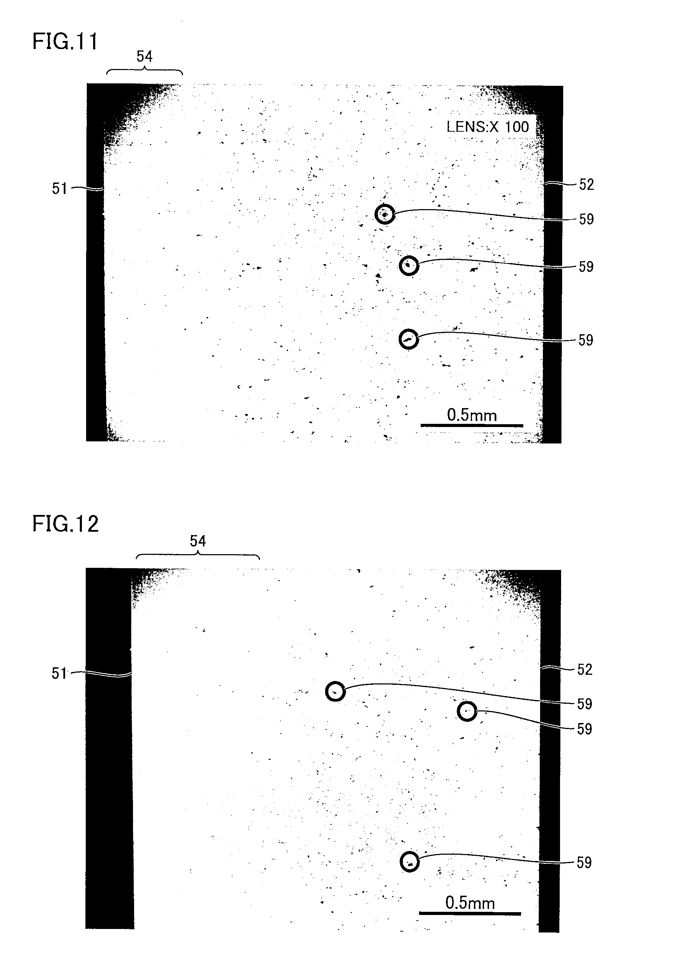

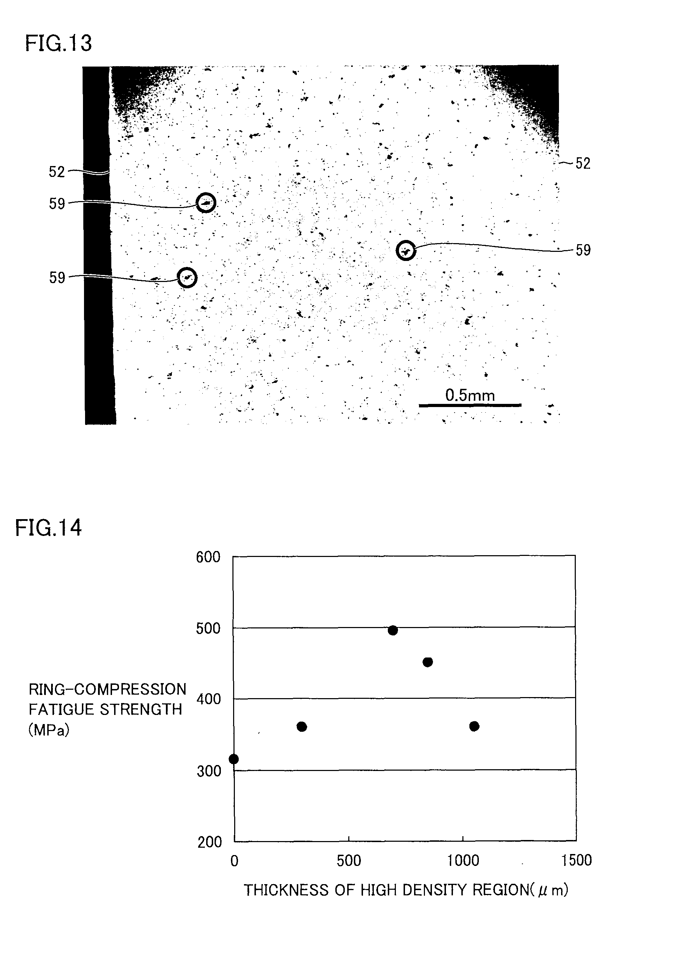

The test pieces obtained in the above-described procedure were subjected to surface hardness measurement by Rockwell hardness-tester and the ring-compression fatigue test. The conditions of the fatigue test were set such that the stress ratio was 0.1 and the frequency was 20 Hz. The results of the surface hardness measurement and the fatigue test are shown in Table 2. Furthermore, Figs. 11, 12 and 13 show observation photographs of cross-sections of the test pieces in Example 1, Example 3 and Comparative Example 1, respectively. Furthermore, Fig. 14 shows the relation between the thickness of the high density region and the ring-compression fatigue strength that was obtained from the results of the fatigue test. It is to be noted that the fatigue strength was measured based on JIS Z 2273. Furthermore, the obtained fatigue strength was compared with the fatigue strength of the test piece of each Comparative Example that was made of the same material. Then, the result showing the improvement rate of 10% or more and less than 20% was evaluated as C, the result showing the improvement rate of 20% or more and less than 30% was evaluated as B, and the result showing the improvement rate of 30% or more was evaluated as A.

Referring to Figs. 11 to 13, it turns out that, in the test piece in each of Figs. 11 and 12 having been subjected to cold rolling working, a high density region 54 that is significantly less in number of pores 59 is formed in a region including a processed surface 51. On the other hand, it is confirmed that pores 59 exist even in the vicinity of the surface on the unprocessed surface 52 side that has not been subjected to cold rolling working.

Then, referring to Table 2, Examples 1 to 6 corresponding to Examples of the present invention each are increased in surface hardness as compared with corresponding Comparative Examples and also improved in fatigue strength by 10% or more. In Particular, while the fatigue strength in the corresponding Comparative Example 1 was 300 MPa, it was confirmed that Example 2 achieved remarkable effects that the fatigue strength was 450 MPa and the improvement rate was 50%. Based on the experimental results described above, it was confirmed that a mechanical structure component having relatively higher fatigue strength can be provided according to the mechanical structure component of the present invention.

Furthermore, Fig. 14 shows that the fatigue strength decreases on the contrary when the high density region is too thick. In consideration of this, it can be recognized that the thickness of the high density region is preferably set to be about 700 µm or less.

Then, referring to Tables 3 to 5, other Examples related to the present invention will be hereinafter described. These experiment examples include Experiments based on Examples 1 to 5 and Comparative Examples 1 to 3. The procedure of each experiment is as follows.

**[Table 3]**

| | Examples 1, 2 and 3 Comparative Example 1 | Example 4 Comparative Example 2 | Example 5 Comparative Example 3 |
|---|---|---|---|
| Material | Iron alloy containing 2% Ni Manufactured by Epson Atmix Corporation Atomized Powder | P2043 to P2045 JIS Z 2550 Atomized Powder | JIP21 SX Manufactured by JFE Steel Corporation Atomized Powder |
| Powder Average Particle Diameter (D50) | 10 µm | 70 µm | 150 µm |
| Molding Pressure | 1000 MPa | 1000 MPa | 600 MPa |
| Sintering Condition | 1250 °C, 150 min. | | |
| Relative Density | 93% | 95% | 88% |

**[Table 4]**

| Gear Shape | Involute Standard Spur Gear | Reference Pitch Circle Diameter | 17 mm |
|---|---|---|---|
| Tooth Shape | Full Depth Tooth | Number of Teeth in Span | 2 |
| Module | 1mm | Number of Teeth in Span | 4.66 mm |
| Pressure Angle | 20° | Tip Diameter | 19 mm |
| Number of Teeth | 17 | Root Diameter | 14.5 mm |

**[Table 5]**

| | Example 1 | Example 2 | Example 3 | Example 4 | Example 5 | Comparative Example 1 | Comparative Example 2 | Comparative Example 3 |
|---|---|---|---|---|---|---|---|---|
| Porosity of High-Density Tooth Root Region (%) | 5 | 2 | 1 | 2 | 2 | (7) | (5) | (12) |
| Root Diameter before Cold Working (mm) | 14.6 | 15.0 | 15.3 | 14.8 | 14.8 | 14.5 | 14.5 | 14.5 |
| Rolling Reduction of Tooth Root Portion (µm) | 50 | 250 | 400 | 150 | 150 | - | - | - |
| Surface Hardness (HRA) | 80 | 80 | 80 | 75 | 70 | 75 | 75 | 70 |
| Tooth Root Bending Fatigue Strength | A | S | A | A | B | - | - | - |

First, metal powders made of three types of materials and having three types of powder average particle diameters (D50) shown in Table 3 were prepared as raw material powders. Each raw material powder was press-molded with the molding pressure shown in Table 3, and sintered under the sintering conditions shown in Table 3. Thus, a sintered element body having dimensions of an outer diameter ϕ 20 mm x a thickness t 7 mm was obtained.

A cutting process was carried out for the sintered element bodies obtained in Examples 1 to 5 and Comparative Examples 1 to 3. The sintered element bodies obtained in Examples 1 to 5 and Comparative Examples 1 to 3 were processed so as to have their respective gear characteristics shown in Table 4. After a cutting process, the tooth bottom portion of the metal sintered body obtained in each of Examples 1 to 5 was subjected to cold working by each rolling reduction shown in Table 5. By performing this cold working, a high-density tooth root region was formed so as to extend the almost entire surface of the tooth root region and so as to include a portion closer to each side of the critical section determined by Hofer's 30° tangent line method.

The high-density tooth root region formed in the metal sintered body in each of Examples 1 to 5 had porosity as shown in Table 5. Since the sintered gears (metal sintered bodies) in Comparative Examples 1 to 3 each do not have a high-density tooth root region, Comparative Examples 1 to 3 in Table 5 each show the porosity of the region corresponding to the high-density tooth root region formed in the metal sintered body in each of Examples 1 to 5.

After formation of the high-density tooth root region, a carburizing, quenching and tempering process was carried out to form a surface hardened layer. The carburizing and quenching conditions were controlled such that the carbonized depth was about 200 µm. The conditions for tempering performed thereafter were established such that the processing temperature was set at 150 °C and the processing time was set at 90 minutes. Sintered gears in Examples 1 to 5 and Comparative Examples 1 to 3 were obtained as described above.

For the test piece of the sintered gear in each of Examples 1 to 5 and Comparative Examples 1 to 3 obtained in accordance with the above-described procedure, the surface hardness was measured using a Rockwell hardness-tester and the tooth-root bending fatigue strength test was carried out. The conditions of the tooth root bending fatigue strength test were established such that the number of teeth in the span was set to be two, the stress ratio was set at 0.1, and the frequency was set at 40 Hz.

The results of the surface hardness measurement and the tooth-root bending fatigue strength test are as shown in Table 5. The results of the tooth root bending fatigue strength test in Table 5 show the values evaluated based on the improvement rate (stress amplitude) of the fatigue strength obtained before and after the form rolling process. The result showing the improvement rate of 10% or more and less than 20% is evaluated as B. The result showing the improvement rate of 20% or more and less than 30% is evaluated as A. The result showing the improvement rate of 30% or more is evaluated as S.

Referring to Table 5, Examples 1 to 5 each show that the surface hardness increases as compared with the corresponding Comparative Examples while the tooth root bending fatigue strength is improved by 10% or more. Particularly, with regard to the tooth root bending fatigue strength, an extremely remarkable effect was confirmed that the sintered gear in Example 2 exhibits an improvement rate of 50% or more with respect to that in the corresponding Comparative Example 1. It was confirmed from the experimental results described above that the sintered gears based on Examples 1 to 5 each have relatively higher fatigue strength.

Although a gear and a cam have been described as an example of the mechanical structure component of the present invention in the above-described embodiments, the scope of the present invention is not limited thereto, but the present invention can also be applied, for example, to a shaft, a sprocket and the like.

It should be understood that the embodiments and examples disclosed herein are illustrative and non-restrictive in every respect. The scope of the present invention is defined by the terms of the claims, rather than the description above, and is intended to include any modifications within the meaning and scope equivalent to the terms of the claims.

### INDUSTRIAL APPLICABILITY

The mechanical structure component, the sintered gear and the methods of manufacturing the mechanical structure component and the sintered gear according to the present invention can be particularly advantageously applied to a mechanical structure component and a sintered gear that are required to improve static strength, toughness and fatigue strength while suppressing a decrease in dimensional accuracy, and to methods of manufacturing the mechanical structure component and the sintered gear.

### REFERENCE SIGNS LIST

1 sintered gear (gear), 1A metal sintered body, 2, 31 rotation axis, 3 cam, 4, 12 tooth, 5, 18 bottom land, 5A root circle, 6 top land, 7 tooth root formation region, 8 engagement formation region, 9 tooth tip formation region, 11, 32 main body portion, 13, 39 base region, 14 high density region (high-density tooth root region), 14S, 15, 21S, 22S, 23S surface, 16,41 surface hardened layer, 17, 38 maximum stress position, 20 critical section, 22 engagement region, 23 tooth tip region, 24, 59 pore, 30 rolling die, 33 blade, 34 base portion, 35 end portion, 36 contact surface, 37 through hole, 51 processed surface, 52 unprocessed surface.

## Claims

1. A mechanical structure component made of a metal sintered body, said mechanical structure component comprising:
a base region; and
a high density region formed so as to include a maximum stress position at which a maximum tensile stress or a maximum shear stress is applied, and to include a surface, said high density region being lower in porosity than said base region,
a surface hardened layer being formed in a region including said surface by performing a hardening process.

2. The mechanical structure component according to claim 1, wherein said surface hardened layer is less in thickness than said high density region in a cross section perpendicular to said surface.

3. The mechanical structure component according to claim 1, wherein said high density region has a thickness of 700 µm or less in a cross section perpendicular to said surface.

4. The mechanical structure component according to claim 1, wherein said high density region has a porosity of less than 2%.

5. The mechanical structure component according to claim 1, wherein said surface has hardness of HRA 75 or more.

6. The mechanical structure component according to claim 1, wherein said high density region is formed by performing cold working.

7. A sintered gear made of the mechanical structure component according to claim 1, said sintered gear comprising:
a tooth root region;
an engagement region located closer to a top land than said tooth root region is; and
a tooth tip region located closer to said top land than said engagement region is,
said high density region being formed in said tooth root region so as to include a surface of said tooth root region and a critical section determined by Hofer's 30° tangent line method, said high density region having a density higher than the density of each of said engagement region and said tooth tip region, and
said surface hardened layer being formed on a surface of said high density region.

8. The sintered gear according to claim 7, wherein said high density region has a porosity of 2% or less.

9. The sintered gear according to claim 7, wherein said surface hardened layer is formed by performing a carburizing, quenching and tempering process.

10. The sintered gear according to claim 7, wherein the surface of said high density region has hardness of HRA 75 or more.

11. The sintered gear according to claim 7, wherein said high density region is formed by performing cold working.

12. The sintered gear according to claim 11, wherein said high density region is formed by said cold working using a rolling die by which only a portion of said metal sintered body corresponding to the surface of said tooth root region is subjected to form rolling.

13. The sintered gear according to claim 12, wherein said high density region is formed by said cold working by which only the portion of said metal sintered body corresponding to the surface of said tooth root region is subjected to form rolling while synchronizing rotation of said rolling die having a hob shape and rotation of said metal sintered body.

14. The sintered gear according to claim 12, wherein said high density region is formed by said cold working using said rolling die having, as a blade shape, a base portion formed in a cylindrical shape and an end portion formed in a hemispherical shape.

15. A method of manufacturing a mechanical structure component, said method comprising the steps of:
preparing raw material powder made of metal;
fabricating a metal sintered body by sintering said raw material powder;
forming a high density region so as to include a maximum stress position at which a maximum tensile stress or a maximum shear stress is applied and to include a surface, said high density region being lower in porosity than other regions; and
forming a surface hardened layer in a region including said surface by performing a hardening process.

16. The method of manufacturing a mechanical structure component according to claim 15, wherein, in said step of forming a high density region, said high density region is formed by subjecting said surface to cold working.

17. A method of manufacturing a sintered gear using the method of manufacturing a mechanical structure component according to claim 15,
in said step of forming a high density region, said high density region being formed in a tooth root region of said metal sintered body, said high density region including a surface of said tooth root region and a critical section determined by Hofer's 30° tangent line method, and having a density higher than the density of each of an engagement region and a tooth tip region that are located closer to a top land than said tooth root region is, and
in said step of forming a surface hardened layer, said surface hardened layer being formed on a surface of said high density region.

18. The method of manufacturing a sintered gear according to claim 17, wherein, in said step of forming a surface hardened layer, said surface hardened layer is formed by performing a carburizing, quenching and tempering process.

19. The method of manufacturing a sintered gear according to claim 17, wherein, in said step of forming a high density region, said high density region is formed by performing cold working.

20. The method of manufacturing a sintered gear according to claim 17, wherein, in said step of fabricating a metal sintered body, said metal sintered body having a relative density of 93% or more is fabricated.

21. The method of manufacturing a sintered gear according to claim 17, wherein, in said step of preparing raw material powder, said raw material powder having a particle size with an average particle diameter of 100 µm or less in terms of D50 is prepared.

22. The method of manufacturing a sintered gear according to claim 17,
wherein said metal sintered body before formation of said high density region is greater in root diameter by a range of 100 µm to 800 µm than said sintered gear obtained as a finished product.
